Europäisches Patentamt

European Patent Office

Office européen des brevets

(11) Numéro de publication: **0 052 169**

**A1**

## (12) DEMANDE DE BREVET EUROPEEN

(21) Numéro de dépôt: **80401620.2**

(22) Date de dépôt: **13.11.80**

(51) Int. Cl.³: **F 17 C 13/12**
**F 16 K 17/16**

(43) Date de publication de la demande:
**26.05.82 Bulletin 82/21**

(84) Etats contractants désignés:
**BE DE FR SE**

(71) Demandeur: **Drumare, Huguette**
**28, rue du Commandant Vesco**
**F-76310 Sainte-Adresse(FR)**

(72) Inventeur: **Drumare, Huguette**
**28, rue du Commandant Vesco**
**F-76310 Sainte-Adresse(FR)**

(74) Mandataire: **Hoisnard, Jean-Claude et al,**
**Cabinet Beau de Lomenie 55, rue d'Amsterdam**
**F-75008 Paris(FR)**

(54) Dispositif de sécurité contre les surpressions et citerne pourvue d'un tel dispositif.

(57) L'invention est relative à un dispositif de sécurité contre les surpressions susceptibles de régner dans une enceinte (5), constitué par une membrane déformable (22) appliquée de manière étanche sur les bords (18) d'un orifice (7) reliant l'intérieur (5) de l'enceinte à l'extérieur (17) et par un mainteneur perforé (20) de la membrane (22), disposé entre celle-ci et l'intérieur de l'enceinte.

Un perceur (25) de membrane est disposé du côté de cette membrane (22) opposé au mainteneur (20).

Une application est la protection contre les surpressions des parois des citernes de méthaniers.

FIG.2

EP 0 052 169 A1

<u>Dispositif de sécurité contre les surpressions.</u>

On connaît la nécessité de protection de diverses enceintes contenant des fluides sous pression contre les surpressions. On utilise généralement pour ce faire, des clapets ou des soupapes de décharge tarés. Cependant, pour certaines applications, l'adoption de tels clapets de décharge n'est pas entièrement satisfaisante, notamment en raison de l'étanchéité relativement médiocre de tels clapets.

L'application particulière décrite ci-après, donnée à titre d'exemple, permet de comprendre le problème posé, et, actuellement, mal résolu.

Dans la construction des méthaniers, on réalise des cuves, dites "membranes", qui comportent une paroi, thermiquement isolée. Cette paroi possède une très bonne résistance aux efforts de la pression dirigés de l'intérieur vers l'extérieur de la cuve, jusqu'à des pressions pouvant atteindre plusieurs bars. Par contre, la résistance aux efforts de la pression dirigés de l'extérieur vers l'intérieur est généralement médiocre. Par exemple, il est bon d'éviter que la pression externe à la cuve soit supérieure de plus de dix millibars à la pression régnant à l'intérieur de la cuve. Cette pression externe s'établit généralement dans l'espace, qui est compris entre la cuve principale et une paroi, ou membrane, de sécurité l'entourant et qui contient le matériau d'isolation thermique. Lorsque la pression externe dépasse la valeur prescrite les parois se décollent de leur support et les cuves sont gravement endommagées.

Mettre un clapet de décharge taré reliant l'espace compris entre les deux parois à l'atmosphère résout mal le problème posé, car pour vérifier périodiquement l'étanchéité des parois, on fait le vide dans l'espace d'isolation et l'on enregistre l'élévation éventuelle de pression pendant plusieurs dizaines d'heures. Ces mesures sont délicates et toute fuite parasite résultant des tuyautages et également notamment des clapets de sureté doit être éliminée. C'est pourquoi pendant ces opérations de vérification périodiques, les clapets de sureté sont remplacés par des joints pleins. Si les clapets ne sont pas remontés correctement, on conçoit qu'il y ait un risque très important d'accident, comme cela a été constaté en service.

Le dispositif proposé par l'invention a pour but de protéger efficacement ces espaces contre une surpression de l'ordre de 30 millibars à 50 millibars, tout en restant parfaitement étanche à un vide poussé (dépression de l'ordre de 1 000 millibars). Ainsi, il n'a pas à être démonté, étant lié aux enceintes à protéger par des tuyautages soudés sans aucune bride intermédiaire, de telle sorte qu'il est indémontable en bloc et qu'ainsi toute erreur de manoeuvre est rigoureusement impossible.

Ce qui vient d'être expliqué à propos de l'application à la construction des cuves de méthaniers, est, bien entendu, valable pour toute autre application où des problèmes analogues de sécurité contre les surpressions et d'étanchéité doivent être concomitamment résolus.

L'invention est donc relative à un dispositif de sécurité contre les surpressions susceptibles de régner dans une enceinte, constitué par une membrane déformable appliquée de manière étanche sur les bords d'un orifice reliant l'intérieur de l'enceinte à l'extérieur et par un mainteneur perforé de la membrane, disposé entre celle-ci et l'intérieur de l'enceinte.

Un perceur de membrane est disposé du côté de cette membrane opposé au mainteneur.

Les dispositions suivantes, avantageuses, sont en outre préférentiellement adoptées :

- la membrane est réalisée en élastomère ;

- le dispositif comporte en outre un mainteneur auxiliaire disposé entre la membrane et le mainteneur perforé, dont seule la zone centrale est perméable, comportant de préférence un évidement cruciforme ;

- le dispositif comporte un détecteur d'une surpression intermédiaire inférieure à la surpression maximale d'éclatement de la membrane ;

- le mainteneur est réalisé en un matériau fritté, constituant un dispositif pare-flamme.

L'invention a également pour objet une citerne destinée à contenir un gaz liquéfié, telle que, notamment une citerne
de navire transporteur de gaz naturel liquéfié ou de gaz de pétrole, faisant application d'un dispositif de sécurité précédent, dans
laquelle ladite enceinte est constituée par l'espace qui est compris entre la paroi interne délimitant la citerne et une paroi de
sécurité à l'intérieur de laquelle est disposée cette paroi interne, et, qui est susceptible d'être mis soit en surpression, soit en
dépression par rapport à la pression régnant à l'intérieur de la
citerne.

L'invention sera mieux comprise, et des caractéristiques secondaires et leurs avantages apparaîtront au cours de la
description de réalisations donnée ci-dessous à titre d'exemple.

Il est entendu que la description et les dessins ne
sont donnés qu'à titre indicatif et non limitatif.

Il sera fait référence aux dessins annexés, dans lesquels :

- la figure 1 est une coupe verticale d'une citerne
de méthanier munie d'un dispositif conforme à l'invention ;

- la figure 2 est une coupe verticale d'une première
réalisation du dispositif conforme à l'invention dont est munie la
citerne de la figure 1 ;

- la figure 3 est une vue suivant flèche F de la figure 2 ;

- la figure 4 est une coupe suivant IV-IV de la figure 2 ;

- la figure 5 est une vue en élévation du dispositif
des figures 2 à 4, dans la configuration d'éclatement de sa membrane déformable ;

- la figure 6 est une coupe verticale, analogue à celle
de la figure 2, d'une deuxième réalisation d'un dispositif conforme
à l'invention ; et,

- la figure 7 est une coupe suivant VII-VII de la figure 6.

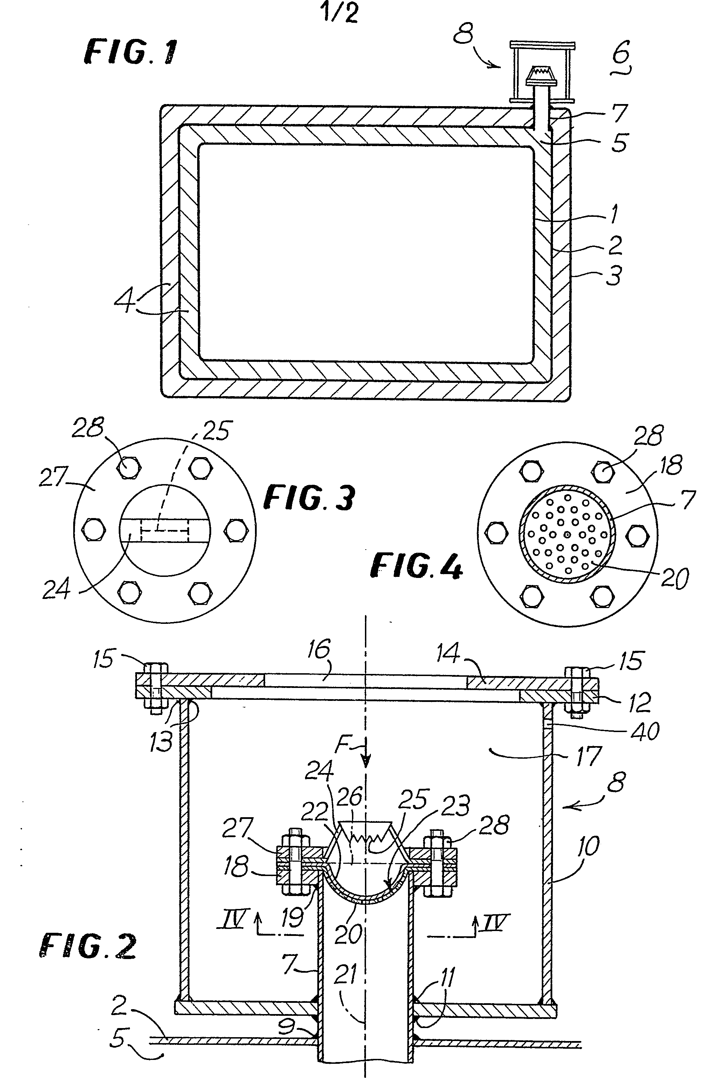

La citerne de méthanier représentée sur la figure 1
comporte trois parois successives 1, 2 et 3, du type "membrane", entre deux successives desquelles est disposé un matériau d'isolation thermique 4. L'espace 5 compris entre la paroi intérieure 1 et la paroi suivante 2 est relié à l'atmosphère 6 par un conduit 7 sur lequel est disposé un dispositif 8 conforme à l'invention.

En regard de la figure 2, on note que le conduit 7 est soudé (9) à la paroi 2. Un caisson 10 est fixé par soudage 11 sur la partie supérieure du conduit 7, à l'extérieur de l'espace 5, et comprend à sa partie supérieure une bride 12, soudée (13) et une contre-bride de fermeture 14, qui est fixée sur la bride 12 par des vis 15. La contre-bride 14 présente une fenêtre transparente 16 permettant la vision de l'espace intérieur 17 du caisson sans démontage de la contre-bride 14.

A l'intérieur du caisson 10, communiquant avec l'atmosphère (40), se trouve disposé le dispositif de sécurité proprement dit.

Une bride 18 est soudée (19) sur la tranche supérieure extrême du conduit 7. Y est adapté un mainteneur perforé 20, en forme de calotte hémisphérique coaxiale à l'axe 21 du conduit 7 et dont la convexité est orientée vers le bas. Une membrane 22, réalisée en un élastomère très souple, est disposée au-dessus du mainteneur 20 et, dans la configuration de la figure 2, est soutenue par la face supérieure concave 23 du mainteneur, dont elle épouse la forme. Le support 24 d'une lame dentée de perçage 25 est placé au-dessus de la membrane, la lame 25, formant perceur, s'étendant à une distance non nulle du mainteneur 20, au-delà du plan de fixation 26 de la membrane. Une contre-bride 27 s'adapte en regard de la bride 18, au-dessus du support 24, cependant que des boulons 28 maintiennent en position de montage la périphérie du mainteneur 20 sur la bride 18, la périphérie de la membrane 22 sur celle du mainteneur 20, le support 24, et, la contre-bride 27.

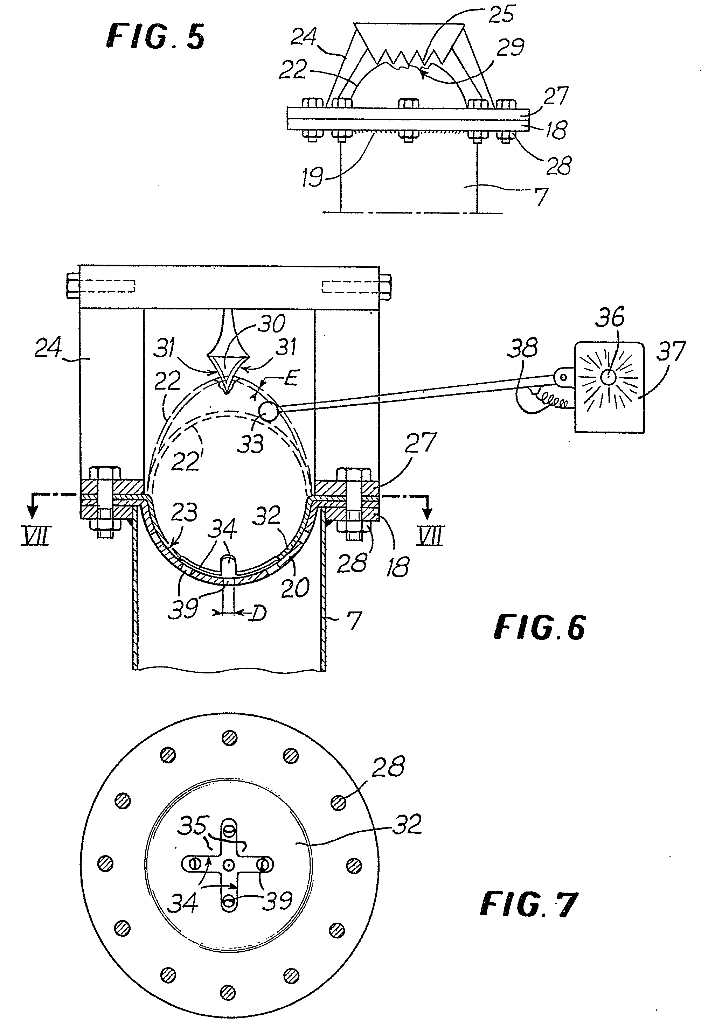

En regard de la figure 5, la membrane 22 est repoussée par la pression du fluide contenu dans le conduit 7, vers la lame 25 et présente une déchirure d'éclatement 29 au contact de ladite lame.

En regard des figures 6 et 7, est représentée une

5

variante de réalisation remarquable, par rapport à la première réalisation décrite, par les points suivants :

- la lame 25 est remplacée par une pointe acérée 30, en forme de pointe de flèche, munie de tranchants 31 ;

- un deuxième mainteneur 32, dit mainteneur auxiliaire, est disposé entre la membrane 22 et le mainteneur principal 20 déjà cité ;

- un palpeur de position 33, est disposé sur le trajet de la membrane 22 entre sa configuration de soutien par les mainteneurs 20 et 32, et, sa configuration d'éclatement, au contact de la pointe 30.

Le mainteneur auxiliaire 32 est une calotte sphérique, dont la forme s'adapte à celle de la face supérieure 23 du mainteneur principal 20, et qui est pleine, sauf une découpure centrale 34 en croix. La matière de ce mainteneur auxiliaire peut être un élastomère relativement rigide, beaucoup plus rigide que la membrane 22, mais dont la souplesse permet cependant la déformation des pans angulaires 35 adjacents à la découpure 34, sous l'effet de la pression intérieure au conduit 7.

Le palpeur 33 détecte le gonflement de la membrane en une configuration intermédiaire entre celle de soutien par les mainteneurs 20 et 32, et, celle du gonflement maximal, à laquelle correspond l'éclatement de la membrane 22. Cette configuration intermédiaire avant éclatement est donc détectée, et, matérialisée par le fonctionnement d'un signal d'alarme 36 d'un dispositif d'alarme 37, auquel le palpeur 33 est relié par des fils de connexion 38.

On notera encore que les perforations du mainteneur principal 20 sont constituées très simplement par des trous circulaires 39, dont le diamètre $D$ est, de préférence, au plus égal à trois fois l'épaisseur $E$ de la membrane 22.

Il sera enfin indiqué d'une part, que le mainteneur 20 peut être réalisé en un disque plan, en métal fritté, d'autre part, que l'organe de perçage de la membrane peut être d'un type, dit actif, et, par exemple, être monté coulissant parallèlement à l'axe 21 du conduit 7, en étant attelé à un mécanisme de détente à ressort qui le projette violemment contre la membrane, ce qui augmente l'efficacité du perçage.

Le fonctionnement des dispositifs décrits va maintenant être exposé.

Il convient, d'abord, de formuler une observation de principe, selon laquelle un dispositif de sécurité contre les surpressions, du type de celui qui a été décrit, ne peut fonctionner correctement que si trois éléments sont réunis, et ce, de manière fondamentale, à savoir :

- la présence d'une membrane étanche et déformable,

- la présence d'un mainteneur de cette membrane, sinon, compte tenu de la grande flexibilité que possède la membrane choisie, celle-ci ne possèdera pas la résistance suffisante pour subir, sans déformation inadmissible, les effets de la dépression susceptible de régner dans l'enceinte,

- la présence d'un perceur de la membrane, afin que, dans le cas où exceptionnellement règnerait une surpression dans l'enceinte, la mise à l'atmosphère soit réalisée de manière pratiquement instantanée.

A ces trois conditions, on peut en ajouter une quatrième implicite : le fait que la membrane doit être très flexible et qu'elle est, pour ce faire, de préférence réalisée en un élastomère dont la flexibilité est très supérieure à la totalité des matières plastiques, non élastomères, connues à ce jour.

Cette remarque étant faite, on constate que les dispositifs proposés satisfont effectivement aux exigences formulées.

Lorsque le vide, au moins partiel, est réalisé à l'intérieur de l'espace 5, la membrane 22 est soutenue par le mainteneur principal 20 ou auxiliaire 32. Dans le cas de membrane très souple, le mainteneur auxiliaire 32 assure un soutien très complet de la membrane, étant plein sur la presque totalité de son étendue.

Lorsqu'au contraire une surpression existe dans l'espace 5, son effet est de repousser la membrane 22 vers l'organe de perçage.

Cette surpression peut être importante et provoquer l'éclatement de la membrane par contact avec la lame 25 ou la pointe 30. Elle peut cependant avoir une valeur moindre et ne pas provoquer l'éclatement immédiat de la membrane. Il peut cependant être utile au personnel de surveillance d'être prévenu de l'approche de la configuration d'éclatement pour lui permettre de réagir afin d'éviter cet éclatement. Le palpeur de position 33 permet cette détection, et, par conséquent, cette prévention.

Les dispositions décrites assurent une protection complète contre les surpressions, même de faible valeur (30 à 50 millibars), ce que n'assurent pas les clapets de décharge tarés classiques. Elles permettent, en outre, d'effectuer des essais sous vide sans démontage, et par conséquent, avec maintien de l'étanchéité du montage d'origine.

Il est enfin précisé qu'un des avantages de la réalisation du mainteneur 20 en un alliage ou en un métal fritté réside, outre la facilité de fabrication, dans une fonction supplémentaire que peut assurer ce mainteneur : celle de pare-flamme, c'est-à-dire celle d'une barrière faisant obstacle à la propagation éventuelle des flammes entre l'amont et l'aval du dispositif, après éclatement éventuel de la membrane 22.

L'invention n'est pas limitée aux réalisations décrites, mais en couvre au contraire toutes les variantes qui pourraient leur être apportées sans sortir de leur cadre, ni de leur esprit.

0052169

8

## REVENDICATIONS

1 - Dispositif de sécurité contre les surpressions susceptibles de régner dans une enceinte, constitué par une membrane déformable appliquée de manière étanche sur les bords d'un orifice reliant l'intérieur de l'enceinte à l'extérieur et par un mainteneur perforé de la membrane, disposé entre celle-ci et l'intérieur de l'enceinte, caractérisé en ce qu'il comprend en outre un perceur de membrane disposé du côté de cette membrane opposé au mainteneur.

2 - Dispositif de sécurité selon la revendication 1, caractérisé en ce que la membrane est réalisée en élastomère.

3 - Dispositif de sécurité selon l'une quelconque des revendications 1 et 2, caractérisé en ce qu'il comporte en outre un mainteneur auxiliaire disposé entre la membrane et le mainteneur perforé, dont seule la zone centrale est perméable, comportant de préférence un évidement cruciforme.

4 - Dispositif de sécurité selon l'une quelconque des revendications 1 à 3, caractérisé en ce qu'en outre, il comporte un détecteur d'une surpression intermédiaire inférieure à la surpression maximale d'éclatement de la membrane.

5 - Dispositif de sécurité selon l'une quelconque des revendications précédentes, caractérisé en ce que le mainteneur est réalisé en un matériau fritté, constituant un dispositif pare-flamme.

6 - Citerne destinée à contenir un gaz liquéfié, telle que, notamment, une citerne de navire transporteur de gaz naturel liquéfié ou de gaz de pétrole, faisant application d'un dispositif de sécurité selon l'une quelconque des revendications 1 à 5, caractérisée en ce que ladite enceinte est constituée par l'espace qui est compris entre la paroi interne délimitant la citerne et une paroi de sécurité à l'intérieur de laquelle est disposée cette paroi interne, et qui est susceptible d'être mis soit en surpression, soit en dépression par rapport à la pression régnant à l'intérieur de la citerne.

## REVENDICATIONS

1 - Dispositif de sécurité contre les surpressions susceptibles de régner dans une enceinte, constitué par une membrane déformable appliquée de manière étanche sur les bords d'un orifice reliant l'intérieur de l'enceinte à l'extérieur et par un mainteneur perforé de la membrane, disposé entre celle-ci et l'intérieur de l'enceinte, caractérisé en ce qu'il comprend en outre un perceur de membrane disposé du côté de cette membrane opposé au mainteneur.

2 - Dispositif de sécurité selon la revendication 1, caractérisé en ce que la membrane est réalisée en élastomère.

3 - Dispositif de sécurité selon l'une quelconque des revendications 1 et 2, caractérisé en ce qu'il comporte en outre un mainteneur auxiliaire disposé entre la membrane et le mainteneur perforé, dont seule la zone centrale est perméable, comportant de préférence un évidement cruciforme.

4 - Dispositif de sécurité selon l'une quelconque des revendications 1 à 3, caractérisé en ce qu'en outre, il comporte un détecteur d'une surpression intermédiaire inférieure à la surpression maximale d'éclatement de la membrane.

5 - Dispositif de sécurité selon l'une quelconque des revendications précédentes, caractérisé en ce que le mainteneur est réalisé en un matériau fritté, constituant un dispositif pare-flamme.

6 - Citerne destinée à contenir un gaz liquéfié, telle que, notamment, une citerne de navire transporteur de gaz naturel liquéfié ou de gaz de pétrole, faisant application d'un dispositif de sécurité selon l'une quelconque des revendications 1 à 5, caractérisée en ce que ladite enceinte est constituée par l'espace qui est compris entre la paroi interne délimitant la citerne et une paroi de sécurité à l'intérieur de laquelle est disposée cette paroi interne, et qui est susceptible d'être mis soit en surpression, soit en dépression par rapport à la pression régnant à l'intérieur de la citerne.

**FIG.1**

**FIG.3**

**FIG.4**

**FIG.2**

2/2 0052169

FIG.5

FIG.6

FIG.7

Office européen des brevets

**RAPPORT DE RECHERCHE EUROPEENNE**

Numéro de la demande
EP 80 40 1620

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| X | FR - A - 2 135 565 (MESSER GRIES-HEIM) <br><br> * Page 1, lignes 1-19; page 2, ligne 37 - page 4, ligne 27; figures 1,2 * <br><br> -- | 1,6 | F 17 C 13/12 <br> F 16 K 17/16 |
| X | FR - A - 2 361 586 (CONTINENTAL DISC) <br><br> * Page 1, lignes 1-5; page 2, ligne 15 - page 3, ligne 26; page 4, ligne 33 - page 11, ligne 23; figures 1-11 * <br><br> -- | 1-3 | |
| X | FR - A - 2 434 322 (BS & B SAFETY SYSTEMS) <br><br> * Page 1, lignes 1-10; page 3, ligne 18 - page 5, ligne 25; figures 1-6 * <br><br> -- | 1,3 | |
| X | FR - A - 2 113 855 (INTERATOM) <br><br> * Page 1, ligne 12 - page 2, ligne 3; page 2, ligne 36 - page 3, ligne 5; page 3, ligne 35 - page 4, ligne 26; figures 1-3 * <br><br> -- | 1,4 | |
| A | US - A - 3 881 629 (K.R. SHAW et al.) | | |
| A | FR - A - 2 147 672 (BLACK, SIVALLS & BRYSON) <br><br> ---- | | |

**DOMAINES TECHNIQUES RECHERCHES (Int. Cl.³)**

F 16 K 17/14
17/16
17/40
F 17 C 13/06
13/12

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| | | |
|---|---|---|
| Le présent rapport de recherche a été établi pour toutes les revendications | | |
| Lieu de la recherche <br> La Haye | Date d'achèvement de la recherche <br> 11-06-1981 | Examinateur <br> SIEM |

OEB Form 1503.1 06.78